# FASCICULE DE BREVET EUROPEEN

(11) **EP 1 846 665 B1**
(45) Date de publication et mention de la délivrance du brevet: **31.10.2012**
(21) Numéro de dépôt: 06709500.0
(22) Date de dépôt: 10.02.2006
(51) Int. Cl.: F16C 19/36, F16C 33/46, F16C 33/66, F16C 33/78

(54) **PALIER A ROULEMENT CONIQUE COMPRENANT UNE CAGE DE FILTRATION**
KONISCHES KUGELLAGER MIT FILTERKÄFIG
CONICAL ROLLER BEARING COMPRISING A FILTER CAGE

(30) Priorité: 11.02.2005 FR 0501423
(43) Date de publication de la demande: 24.10.2007
(73) Titulaire: S.N.R. ROULEMENTS, 74000 Annecy (FR)
(72) Inventeur: BELUFFI, Stéphane, F-74600 Seynod (FR); BERTHIER, Julien, F-74000 Annecy (FR); LORNAGE, Sandrine, F-42160 Andrezieux Boutheon (FR); DELAFOSSE, Sabine, F-73410 Albens (FR); MERMOUD, Gérard, F-74330 La Balme De Sillingy (FR); RIMOUX, Christophe, F-74330 Epagny (FR)
(74) Mandataire: Novagraaf Technologies
(86) Numéro de dépôt international: PCT/FR2006/050121
(87) Numéro de publication internationale: WO 2006/085037

(56) Documents cités:
- EP-A- 0 644 343
- EP-A- 1 245 846
- DE-A1- 4 338 350
- US-A- 3 694 043
- US-A- 4 664 537

## Description

L'invention concerne un palier à roulement et une cage destinée à être montée dans un tel palier à roulement.

L'invention s'applique spécifiquement aux paliers à roulement conique, c'est-à-dire aux paliers comprenant des bagues intérieure et extérieure comprenant des pistes de roulement obliques entre lesquelles sont disposés des corps roulants coniques.

Ce type de paliers, de par leur aptitude à supporter des efforts radiaux et axiaux importants, trouve particulièrement son application pour la mise en rotation d'une roue de véhicule automobile par rapport au châssis dudit véhicule.

Un problème qui se pose pour ce type de palier est celui de la lubrification et de la protection vis à vis des particules solides extérieures de pollution, telles que des poussières.

On connaît des paliers à roulement dans lesquels est montée, entre les bagues intérieure et extérieure, une cage qui assure d'une part la fonction de positionnement des corps roulants les uns par rapport aux autres et d'autre part la fonction de filtration, c'est-à-dire de permettre le passage d'un fluide de lubrification du palier tout en formant obstacle au passage de particules solides.

Selon des réalisations connues, la cage comprend un corps annulaire sur les bords transversaux duquel des déflecteurs s'étendent généralement radialement.

En particulier, le document EP-A-0 644 343 décrit un palier à roulement conique comprenant une cage à laquelle des moyens d'étanchéité fermant l'espace entre les bagues intérieure et extérieure sont attachés. Un filtre est réalisé en prévoyant des ouvertures dans les moyens d'étanchéité.

Toutefois, cette réalisation n'offre pas entière satisfaction quant à la qualité de la lubrification obtenue. En effet, les ouvertures localisées et essentiellement axiales ne permettent pas d'obtenir le passage régulier et uniforme d'une quantité suffisante de fluide de lubrification dans le palier. Du fait des efforts radiaux et axiaux importants, le palier présente alors des risques de détérioration rapide.

En outre, de telles ouvertures ne sont pas adaptées à la lubrification des paliers à roulement conique dans lesquels le contact oblique entre les corps roulants et les pistes de roulement induit généralement un déplacement du fluide de lubrification depuis le bord transversal du côté du grand diamètre du palier vers le bord transversal du côté du petit diamètre du palier.

Par ailleurs, les moyens d'étanchéité en contact avec les bagues intérieure et extérieur créent un couple de frottement qui réduit les performances du palier quant à la rotation relative de ses bagues et qui provoque une usure des moyens d'étanchéité.

D'autre part, la réalisation précitée complexifie le montage des paliers à roulement conique dans lesquels le montage de la bague extérieure sur la bague intérieure est effectué après la disposition des corps roulants sur la bague intérieure.

L'invention vise à résoudre ces problèmes en proposant un palier à roulement conique comprenant une cage qui combine de façon simple et améliorée les fonctions de positionnement des corps roulants et de filtration.

A cet effet, et selon un premier aspect, l'invention propose un palier à roulement comprenant au moins une bague intérieure et une bague extérieure, lesdites bagues comprenant des pistes de roulement obliques entre lesquelles sont disposés des corps roulants coniques pourvus chacun d'un axe de rotation propre de sorte à permettre la rotation relative desdites bagues, une cage comprenant un corps généralement annulaire tronconique étant montée entre les bagues intérieure et extérieure, le corps comprenant des ouvertures équiréparties dans chacune desquelles un corps roulant est disposé généralement selon son axe de rotation propre, ladite cage comprenant en outre un déflecteur annulaire s'étendant généralement radialement à chacun des bords transversaux du corps, chaque déflecteur annulaire comprenant au moins une saillie intérieure et une saillie extérieure généralement radiales qui s'étendent de part et d'autre du corps en direction respectivement de la bague intérieure et de la bague extérieure, l'extrémité libre de chaque saillie étant disposée en regard et à distance de la bague correspondante de sorte que le palier présente des jeux fonctionnels axiaux et radiaux entre les saillies et les bagues, lesdits jeux étant dimensionnés pour permettre le passage d'un fluide de lubrification du palier et former obstacle au passage de particules solides.

Ainsi, le palier à roulement selon l'invention présente une combinaison de quatre jeux à la fois radiaux et axiaux de sorte à assurer un passage régulier et une quantité suffisante de fluide de lubrification. Par ailleurs, l'absence de contact entre les saillies et les bagues simplifie le montage du palier et permet d'éviter l'ajout d'un couple de frottement tout en formant obstacle au passage de particules solides.

Selon une réalisation particulière, au moins l'un des bords transversaux de la bague extérieure est situé entre les bords transversaux de la bague intérieure, les saillies extérieure et intérieure du déflecteur annulaire correspondant ayant leur extrémité libre disposée en regard respectivement d'une surface radiale de la bague extérieure et d'une surface axiale de la bague intérieure.

Cette réalisation est adaptée au déplacement du fluide de lubrification dans le palier à roulement conique pour permettre une lubrification satisfaisante du palier.

Selon un deuxième aspect, l'invention concerne une cage destinée à être montée dans un palier à roulement selon le premier aspect, ladite cage comprenant un corps généralement annulaire tronconique, le corps comprenant des ouvertures équiréparties dans chacune desquelles un corps roulant est destiné à être disposé généralement selon son axe de rotation propre, ladite cage comprenant en outre un déflecteur annulaire s'étendant généralement radialement à chacun des bords transversaux du corps, chaque déflecteur annulaire comprenant au moins une saillie intérieure et une saillie extérieure généralement radiales qui s'étendent de part et d'autre du corps, les dimensions de chaque déflecteur annulaire étant prévues pour que l'extrémité libre de chaque saillie soit disposée en regard et à distance de la bague correspondante et permettre la formation de jeux fonctionnels axiaux et radiaux entre les saillies et les bagues, lesdits jeux étant dimensionnés pour permettre le passage d'un fluide de lubrification du palier et former obstacle au passage de particules solides.

D'autres objets et avantages de l'invention apparaîtront au cours de la description qui suit, faite en référence aux dessins annexés, dans lesquels :
- la figure 1 est une vue en coupe longitudinale d'un palier à roulement conique comprenant une cage selon un premier mode de réalisation assurant le positionnement de corps roulants coniques les uns par rapport aux autres entre des pistes de roulement obliques réalisées sur des bagues intérieure et extérieure, ladite cage comprenant un déflecteur annulaire à chacune des extrémités d'un corps annulaire tronconique, chaque déflecteur comprenant des saillies annulaires continues, des jeux fonctionnels axiaux et radiaux étant formés entre les saillies et les bagues ;
- la figure 2 est une vue en perspective de la cage du côté du petit diamètre du palier à roulement conique de la figure 1 ;
- la figure 3 est une vue de la face transversale de la cage du côté du petit diamètre du palier à roulement conique de la figure 1 ;
- la figure 4 est une vue en coupe longitudinale de la cage selon la ligne IV-IV de la figure 3 ;
- la figure 5 est une vue en coupe longitudinale d'un palier à roulement comprenant une cage selon un deuxième mode de réalisation, chaque déflecteur comprenant une pluralité de saillies adjacentes, la surface transversale extérieure de chaque déflecteur étant incurvée en direction de l'autre déflecteur ;
- la figure 6 est une vue en perspective de la cage du côté du petit diamètre du palier à roulement conique de la figure 5 ;
- la figure 7 est une vue de la face transversale de la cage du côté du petit diamètre du palier à roulement conique de la figure 5 ;
- la figure 8 est une vue en coupe longitudinale de la cage selon la ligne VIII-VIII de la figure 7;
- la figure 9 est une vue en coupe longitudinale d'un palier à roulement comprenant une cage selon un troisième mode de réalisation, le déflecteur annulaire du côté du grand diamètre étant associé sur le bord transversal du corps par des moyens d'association ;
- la figure 10 est une vue en perspective de la cage du côté du grand diamètre du palier à roulement de la figure 9 ;
- la figure 11 est une vue de la face transversale de la cage du côté du petit diamètre du palier à roulement de la figure 9 ;
- la figure 12 est une vue en coupe longitudinale de la cage selon la ligne XII-XII de la figure 11 ;
- les figures 13a et 13b sont des vues partielles des détails respectivement A et B de la figure 12 représentant les moyens d'association du déflecteur au corps, lesdits moyens comprenant des plots de centrage et des crochets sur le bord transversal du corps et des orifices sur le déflecteur annulaire ;
- la figure 14 est une vue en coupe longitudinale de la cage selon la ligne XIV-XIV de la figure 11 ;
- la figure 15 est une vue partielle du détail C de la figure 14 ;
- les figures 16a et 16b sont des vues respectivement du déflecteur du côté du grand diamètre et du corps de la cage de la figure 9, le déflecteur étant séparé du corps annulaire.

En relation avec les figures, on décrit un palier à roulement d'axe D comprenant une première bague 1 et une deuxième bague 2 coaxiales et comprenant chacune une piste de roulement 3 oblique par rapport à l'axe D.

Toutefois, la description réalisée en relation avec ce mode de réalisation est directement transposable à un palier comprenant des première 1 et deuxième 2 bagues sur chacune desquelles deux pistes de roulement 3 sont réalisés, la première bague 1 et/ou la deuxième bague 2 pouvant être réalisées en deux parties comprenant chacune une piste de roulement 3.

Dans la suite de la description, les termes « axial » ou « longitudinal » ou « latéral » et « radial » ou « transversal » font référence à des plans respectivement parallèles et perpendiculaires à l'axe D. D'autre part, les termes « extérieur » et « intérieur » font référence à des plans longitudinaux respectivement à distance et à proximité de l'axe D ou à des plans transversaux situés respectivement à proximité et à distance des bords transversaux du palier.

Les inclinaisons des pistes de roulement 3 sont réalisées de sorte que l'écart radial entre les pistes de roulement 3 diminue conjointement avec l'écart radial entre chaque piste de roulement 3 et l'axe D. Le palier à roulement présente alors un grand diamètre à proximité du bord transversal où l'écart radial entre les pistes de roulement 3 d'une même bague 1, 2 est le plus grand et un petit diamètre à proximité du bord transversal où l'écart radial entre les pistes de roulement 3 d'une même bague 1, 2 est le plus petit.

Des corps roulants coniques 4 identiques pourvus chacun d'un axe de rotation propre R sont disposés entre les pistes de roulement obliques 3 de sorte à permettre la rotation relative des première 1 et deuxième 2 bagues par rapport à l'axe D.

Le maintien en position des corps roulants coniques 4 les uns par rapport aux autres entre la première bague intérieure 1 et la deuxième bague extérieure 2 est obtenu au moyen d'une cage montée entre lesdites bagues.

La cage comprend un corps généralement annulaire tronconique 5 qui présente une surface intérieure et une surface extérieure inclinées par rapport à l'axe D. L'inclinaison générale du corps 5 est sensiblement la même que celle des pistes de roulement 3 et la dimension axiale du corps annulaire correspond sensiblement à la dimension axiale des pistes de roulement 3. En outre, l'épaisseur du corps 5, à savoir l'écart radial entre ses surfaces intérieure et extérieure, est généralement inférieure au diamètre de la section circulaire des corps roulants coniques 4. Par ailleurs, cette épaisseur augmente sensiblement depuis le petit diamètre vers le grand diamètre du palier.

Le corps 5 comprend des ouvertures équiréparties 6 dans chacune desquelles un corps roulant conique 4 est disposé généralement selon son axe de rotation propre R. Sur les figures, l'axe de rotation propre R des corps roulants 4 est situé en-dessous de la surface intérieure du corps annulaire 5. Le corps annulaire 5 présente alors, entre deux ouvertures 6 consécutives, des ponts de matière 7 de forme générale pyramidale dont les bases 8 forment la surface extérieure du corps annulaire 5. A proximité du grand diamètre, une rainure axiale 9 est réalisée sur une portion de chacune des faces latérales des ponts de matières 7. Les ponts de matière 7 présente alors sur ladite portion des surfaces sensiblement parallèles dont l'écart transversal et inférieur à l'écart transversal des bords de la base 8.

Les paliers à roulement conique, c'est-à-dire comprenant des pistes de roulement obliques 3 entre lesquelles sont disposés des corps roulants coniques 4, sont utilisées pour permettre la rotation relative d'une première pièce solidaire de l'une des bagues par rapport à une deuxième pièce solidaire de l'autre bague tout en supportant des charges axiales et radiales importantes. En particulier, ces paliers sont utilisés pour permettre la rotation d'une roue de véhicule automobile par rapport au châssis dudit véhicule.

De ce fait, la lubrification du palier et la protection vis à vis de l'introduction entre les bagues 1, 2 des particules solides extérieures de pollution, telles que des poussières, sont déterminantes pour obtenir un palier dont la durée de vie est satisfaisante.

Outre la fonction de positionnement des corps roulants 4 les uns par rapport aux autres entre les bagues 1, 2, on prévoit que la cage réalise également la fonction de filtration, c'est-à-dire de permettre le passage d'un fluide de lubrification du palier et de former obstacle au passage de particules solides.

Pour ce faire, la cage comprend en outre un déflecteur annulaire 10 qui s'étend généralement radialement à chacun des bords transversaux du corps annulaire 5. La cage comprend alors un déflecteur annulaire 10 de plus grand diamètre situé du côté du grand diamètre du palier et un déflecteur annulaire 10 de plus petit diamètre situé du côté du petit diamètre du palier. Chaque déflecteur annulaire 10 comprend au moins une saillie intérieure 11 et une saillie extérieure 12 généralement radiales qui s'étendent de part et d'autre du corps 5 en direction respectivement de la bague intérieure 1 et de la bague extérieure 2. Les dimensions, tant radiale que axiale, de chaque déflecteur annulaire 10 sont prévues pour que l'extrémité libre de chaque saillie 11, 12 soit disposée en regard et à distance de la bague correspondante 1, 2. Le palier présente ainsi des jeux fonctionnels 13 axiaux et radiaux entre les saillies intérieures 11 et la bague intérieure 1 et entre les saillies extérieures 12 et la bague extérieure 2.

Les jeux fonctionnels 13 sont dimensionnés pour permettre la réalisation optimale de la fonction de filtration. De plus, cette réalisation de la fonction de filtration est améliorée par la combinaison des quatre jeux fonctionnels 13 à la fois axiaux et radiaux entre les saillies 11, 12 et les bagues 1, 2. D'autre part, les jeux fonctionnels 13 permettent d'empêcher le passage des particules extérieures de pollution sans contact frottant entre les saillies 11, 12 et les bagues 1, 2. On évite ainsi d'ajouter un couple de frottement lors de la rotation relative des bagues 1, 2 et donc de nuire aux performances du palier. En outre, la palier tel qu'il vient d'être décrit présente des facilités de montage puisque les jeux fonctionnels 13 permettent le montage de la bague extérieure 2 sur la bague intérieure 1 sur laquelle les corps roulants coniques 4 disposés dans la cage sont montés.

En outre, la fonction de filtration est obtenue de façon simple puisqu'elle ne nécessite pas d'usinage particulier. On évite ainsi, par exemple, la réalisation de portée de contact sur les bagues intérieure 1 et extérieure 2 qui peuvent être standards ou la réalisation d'orifices dans les déflecteurs 10.

Sur les figures, on prévoit qu'au moins l'un des bords transversaux de la bague extérieure 2 soit situé entre les bords transversaux de la bague intérieure 1. En particulier, la bague extérieure 2 présente une dimension axiale inférieure à celle de la bague intérieure 1, les bords transversaux des bagues intérieure 1 et extérieure 2 du côté du petit diamètre du palier sont disposées sensiblement dans le même plan alors que le bord transversal de la bague extérieure 2 du côté du grand diamètre est situé entre les bords transversaux de la bague intérieure 1.

Outre la réduction de l'encombrement axial du palier, cette réalisation est particulièrement adaptée pour l'amélioration la fonction de filtration de la cage dans un palier à roulement conique.

En effet, les saillies extérieure 11 et intérieure 12 du déflecteur annulaire 10 du côté du grand diamètre peuvent avoir leur extrémité libre disposée en regard respectivement d'une surface radiale 14 de la bague extérieure 2 et d'une surface axiale 15 de la bague intérieure 1.

Ainsi, on combine, du côté du grand diamètre du palier, d'une part la disposition particulière des saillies 11, 12 par rapport aux surfaces des bagues 1, 2 et d'autre part la présence des rainures 9. Cette combinaison permet d'obtenir un passage régulier d'une quantité suffisante de fluide de lubrification. De plus, la combinaison est adaptée à la lubrification particulière d'un palier à roulement conique dans lequel fluide de lubrification se déplace généralement depuis le grand diamètre vers le petit diamètre du fait de l'inclinaison des pistes de roulement 3 et de la conicité des corps roulants 4. Le fluide de lubrification peut, en effet, être « stocké » sur la paroi axiale 15 de la bague intérieure 1 et dans les rainures 9 pour en uniformiser la distribution dans le palier.

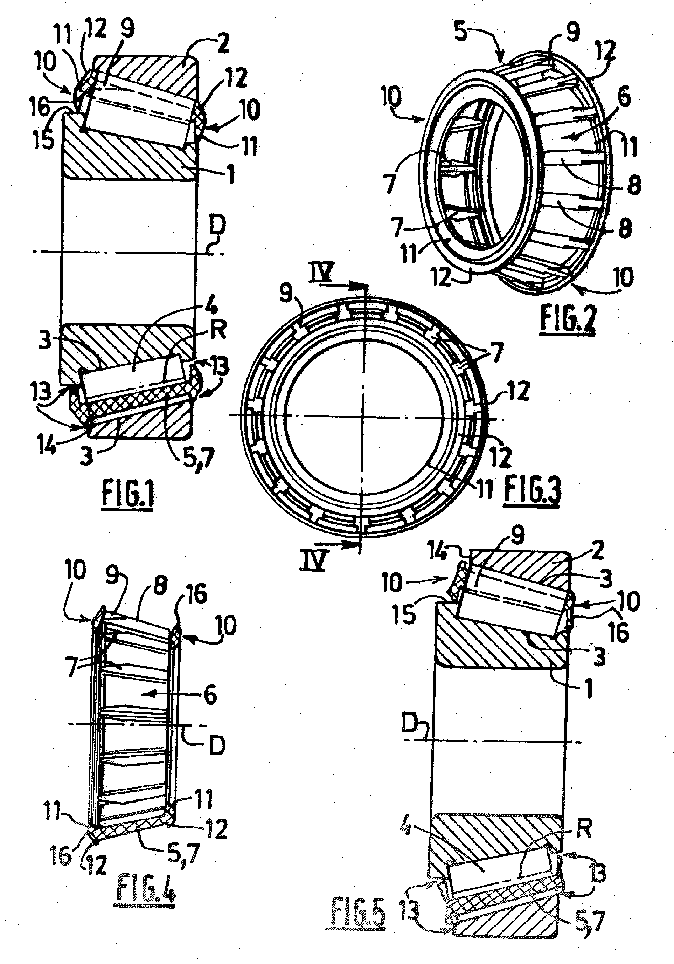

Selon un premier mode de réalisation représenté sur les figures 1 à 4, le corps annulaire 5 et les déflecteurs annulaires 10 sont venus de matière. Les déflecteurs 10 ont une surface transversale extérieure 16 généralement bombée vers l'extérieur et comprennent une saillie intérieure 11 et une saillie extérieure 12 qui sont annulaires et continues.

Selon un deuxième mode de réalisation représenté sur les figures 5 à 8, les déflecteurs 10 comprennent une pluralité de saillies intérieures 11 et extérieures 12 adjacentes. Les saillies 11, 12 sont disposées sur les bords transversaux des ouvertures 6 de sorte que les déflecteurs annulaires présentent une alternance d'ailettes 17 sur les bords transversaux et d'encoches 18 entre les ouvertures 6.

Pour permettre de repousser les particules solides en contact avec la cage, la surface transversale extérieure 16 de chaque déflecteur 10 est incurvée en direction de l'autre déflecteur 10.

En variante non représentée, la cage peut présenter une combinaison de déflecteurs annulaires 10 réalisés selon le premier ou le deuxième mode décrit ci-dessus. On peut notamment prévoir que l'un des déflecteurs annulaires 10 ou les deux déflecteurs annulaires 10 présentent une saillie annulaire et continue d'un côté du corps et une alternance d'ailettes 17 et d'encoches 18 de l'autre côté du corps. En outre, l'un des déflecteurs annulaires 10 peut présenter une surface transversale extérieure 16 bombée vers l'extérieur et l'autre déflecteur 10 peut présenter une surface transversale extérieure 16 incurvée en direction du déflecteur 10 présentant une surface transversale extérieure 16 bombée.

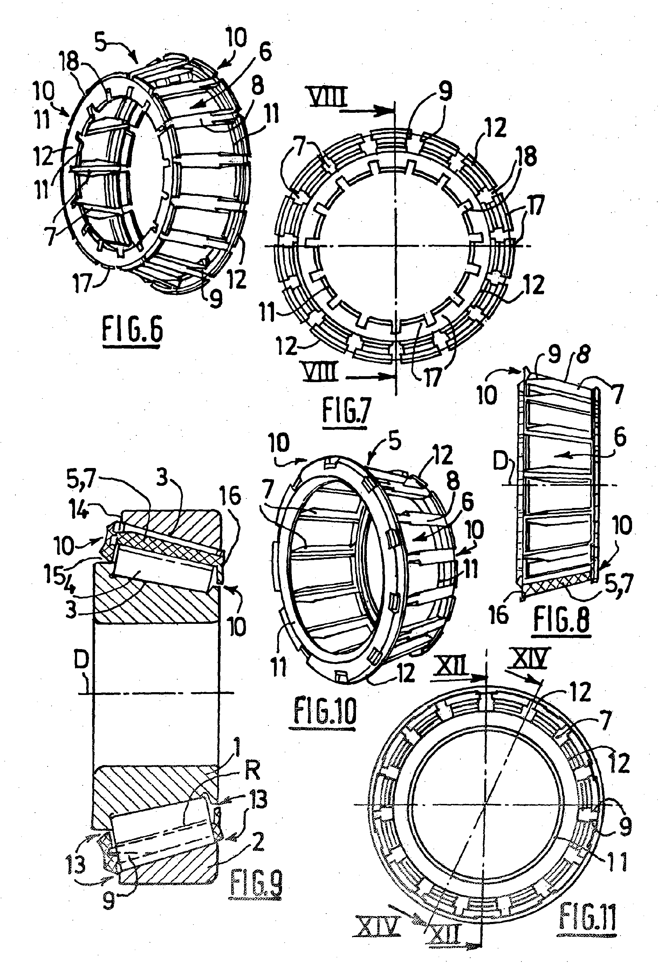

Par ailleurs, le cage peut être réalisée en plusieurs parties associées par des moyens appropriés. En particulier, le corps annulaire 5 peut comprendre plusieurs parties, notamment deux parties. On peut également prévoir, conformément au troisième mode de réalisation représenté sur les figures 9 à 16, que le déflecteur annulaire 10 de plus grand diamètre soit associé sur le bord transversal du corps 5 par des moyens d'association. En variante éventuellement complémentaire, le déflecteur annulaire 10 de plus petit diamètre peut être associé au corps 5 par des moyens d'association.

Les moyens d'association peuvent comprendre des plots de centrage 19 et des crochets 20 réalisés sur le bord transversal du corps annulaire 5, les plots de centrage 19 et les crochets 20 coopérant avec des orifices 21 réalisés sur le déflecteur annulaire 10.

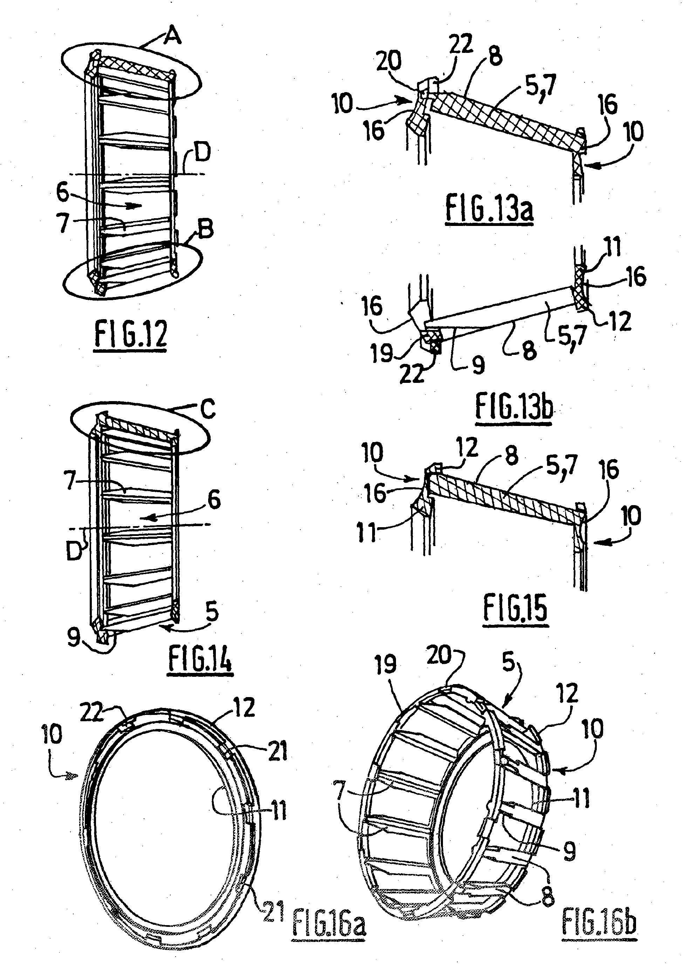

Sur la figure 16b, le corps 5 est pourvu de cinq crochets 20 équirépartis disposés dans le prolongement de ponts de matière 7 et de cinq plots de centrage 19 disposés chacun à égale distance de deux crochets 20 consécutifs. En outre, pour améliorer la tenue des crochets dans les orifices 21, le déflecteur annulaire 10 peut présenter un rebord 22 s'étendant radialement depuis la saillie extérieure 12 en obturant partiellement chaque orifice 21.

## Revendications

1. Palier à roulement comprenant au moins une bague intérieure (1) et une bague extérieure (2), lesdites bagues comprenant des pistes de roulement obliques (3) entre lesquelles sont disposés des corps roulants coniques (4) pourvus chacun d'un axe de rotation propre (R) de sorte à permettre la rotation relative desdites bagues, une cage comprenant un corps (5) généralement annulaire tronconique étant montée entre les bagues intérieure (1) et extérieure (2), le corps comprenant des ouvertures (6) équiréparties dans chacune desquelles un corps roulant (4) est disposé généralement selon son axe de rotation propre (R), ladite cage comprenant en outre un déflecteur annulaire (10) s'étendant généralement radialement à chacun des bords transversaux du corps (5), ledit palier étant **caractérisé en ce que** chaque déflecteur annulaire (10) comprend au moins une saillie intérieure (11) et une saillie extérieure (12) généralement radiales qui s'étendent de part et d'autre du corps (5) en direction respectivement de la bague intérieure (1) et de la bague extérieure (2), l'extrémité libre de chaque saillie (11, 12) étant disposée en regard et à distance de la bague (1, 2) correspondante de sorte que le palier présente des jeux fonctionnels (13) axiaux et radiaux entre les saillies (11, 12) et les bagues (1, 2), lesdits jeux étant dimensionnés pour permettre le passage d'un fluide de lubrification du palier et former obstacle au passage de particules solides.

2. Palier à roulement selon la revendication 1, **caractérisé en ce qu'**au moins l'un des bords transversaux de la bague extérieure (2) est situé entre les bords transversaux de la bague intérieure (1), les saillies extérieure (12) et intérieure (11) du déflecteur annulaire (10) correspondant ayant leur extrémité libre disposée en regard respectivement d'une surface radiale (14) de la bague extérieure (2) et d'une surface axiale (15) de la bague intérieure (1).

3. Palier à roulement selon la revendication 2, **caractérisé en ce que** la bague extérieure (2) présente une dimension axiale inférieure à celle de la bague intérieure (1).

4. Cage destinée à être montée dans un palier à roulement selon l'un quelconque des revendications 1 à 3, ladite cage comprenant un corps (5) généralement annulaire tronconique, le corps (5) comprenant des ouvertures (6) équiréparties dans chacune desquelles un corps roulant (4) est destiné à être disposé généralement selon son axe de rotation propre (R), ladite cage comprenant en outre un déflecteur annulaire (10) s'étendant généralement radialement à chacun des bords transversaux du corps (5), chaque déflecteur annulaire (10) comprenant au moins une saillie intérieure (11) et une saillie extérieure (12) généralement radiales qui s'étendent de part et d'autre du corps (5), les dimensions de chaque déflecteur annulaire (10) étant prévues pour que l'extrémité libre de chaque saillie (11, 12) soit disposée en regard et à distance de la bague (1, 2) correspondante et permettre la formation de jeux fonctionnels (13) axiaux et radiaux entre les saillies (11, 12) et les bagues (1, 2), lesdits jeux étant dimensionnés pour permettre le passage d'un fluide de lubrification du palier et former obstacle au passage de particules solides.

5. Cage selon la revendication 4, **caractérisée en ce que** le corps annulaire (5) comprend des ponts de matière (7) entre les ouvertures (6), une rainure axiale (9) étant réalisée sur une portion de chacune des faces latérales des ponts de matières (7), lesdites rainures étant situées à proximité du déflecteur annulaire (10) de plus grand diamètre.

6. Cage selon la revendication 4 ou 5, **caractérisée en ce que** la surface transversale extérieure (16) d'au moins un déflecteur (10) est incurvée en direction de l'autre déflecteur (10).

7. Cage selon l'une quelconque des revendications 4 à 6, **caractérisée en ce qu'**un déflecteur (10) comprend au moins une saillie (11, 12) annulaire continue.

8. Cage selon l'une quelconque des revendications 4 à 7, **caractérisée en ce qu'**un déflecteur (10) comprend au moins une pluralité de saillies (11, 12) adjacentes, lesdites saillies étant disposées sur les bords transversaux des ouvertures (6) de sorte que le déflecteur annulaire (10) présente une alternance d'ailettes (17) sur lesdits bords transversaux et d'encoches (18) entre les ouvertures (6).

9. Cage selon l'une quelconque des revendications 4 à 8, **caractérisée en ce qu'**au moins un déflecteur annulaire (10) est associé sur le bord transversal du corps (5) par des moyens d'association.

10. Cage selon la revendication 9, **caractérisée en ce que** les moyens d'association comprennent des plots de centrage (19) et des crochets (20) réalisés sur le bord transversal du corps (5), les plots de centrage (19) et les crochets (20) coopérant avec des orifices (21) réalisés sur le déflecteur annulaire (10).

## Claims

1. Roller bearing comprising at least one inner ring (1) and one outer ring (2), said rings comprising bevelled ball tracks (3) between which are arranged conical roller bodies (4) each provided with its own axis of rotation (R) in such a way as to allow the relative rotation of said rings, a cage comprising a generally annular trunconical body (5) being assembled between the inner (1) and outer (2) rings, the body comprising equally-distributed openings (6) in which each has arranged a roller body (4) generally according to its own axis of rotation (R), said cage comprising furthermore an annular deflector (10) extending generally radially at each of the transverse sides of the body (5), said bearing being **characterised in that** each annular deflector (10) comprises at least one generally radial inner projection (11) and one outer projection (12) which extend on either side of the body (5) in the direction respectively from the inner ring (1) and from the outer ring (2), the free end of each projection (11, 12) being arranged opposing and at a separation from the corresponding ring (1, 2) in such a way that the bearing has functional axial and radial plays (13) between the projections (11, 12) and the rings (1, 2), said plays being dimensioned to allow for the passage of a bearing lubrication fluid and to form an obstacle to the passage of solid particles.

2. Roller bearing according to claim 1, **characterised in that** at least one of the transverse sides of the outer ring (2) is located between the transverse sides of the inner ring (1), with the external (12) and internal (11) projections of the corresponding annular deflector (10) having their free end arranged opposing respectively from a radial surface (14) of the outer ring (2) and from an axial surface (15) of the inner ring (1).

3. Roller bearing according to claim 2, **characterised in that** the outer ring (2) has an axial dimension less than that of the inner ring (1).

4. Cage intended to be assembled in a roller bearing according to any of claims 1 to 3, said cage comprising a generally annular trunconical body (5), the body (5) comprising equally-distributed openings (6) in each of which a roller body (4) is intended to be arranged generally according to its own axis of rotation (R), said cage further comprising an annular deflector (10) extending generally radially to each of the transverse sides of the body (5), each annular deflector (10) comprising at least one generally radial internal projection (11) and one external projection (12) which extend on either side of the body (5), with the dimensions of each annular deflector (10) being provided so that the free end of each projection (11,12) is arranged opposing and at a separation from the corresponding ring (1, 2) and to allow for the formation of function axial and radial plays (13) between the projections (11, 12) and the rings (1, 2), said plays being dimensioned to allow for the passage of a bearing lubrication fluid and to form an obstacle to the passage of solid particles.

5. Cage according to claim 4, **characterised in that** the annular body (5) comprises bridges of material (7) between the openings (6), an axial groove (9) being made on a portion of each of the lateral surfaces of the bridges of material (7), said grooves being located in the vicinity of the annular deflector (10) of larger diameter.

6. Cage according to claim 4 or 5, **characterised in that** the external transverse surface (16) of at least one deflector (10) is curved in the direction of the other deflector (10).

7. Cage according to any of claims 4 to 6, **characterised in that** a deflector (10) comprises at least one continuous annular projection (11, 12).

8. Cage according to any of claims 4 to 7, **characterised in that** a deflector (10) comprises at least one plurality of adjacent projections (11, 12), said projections being arranged on the transverse sides of the openings (6) in such a way that the annular deflector (10) has alternating fins (17) on said transverse sides and notches (18) between the openings (6).

9. Cage according to any of claims 4 to 8, **characterised in that** at least one annular deflector (10) is associated on the transverse side of the body (5) via means of association.

10. Cage according to claim 9, **characterised in that** the means of association include centring pins (19) and hooks (20) made on the transverse side of the body (5), with the centring pins (19) and the hooks (20) cooperating with orifices (21) made on the annular deflector (10).

## Patentansprüche

1. Wälzlager, umfassend mindestens einen inneren Ring (1) und einen äußeren Ring (2), wobei die Ringe schräge Laufbahnen (3) aufweisen, zwischen denen kegelstumpfartige Rollkörper (4) angeordnet sind, die jeweils mit einer eigenen Drehachse (R) versehen sind, um die relative Drehung der Ringe zu ermöglichen, wobei ein Käfig mit einem im Allgemeinen ringförmigen kegelstumpfartigen Körper (5) zwischen dem innern (1) und dem äußern (2) Ring montiert ist, wobei der Körper gleichförmig verteilte Öffnungen (6) umfasst, in jeder derer ein Rollkörper (4) im Allgemeinen entlang seiner eigenen Drehachse (R) angebracht ist, wobei der Käfig außerdem einen ringförmigen Deflektor (10) aufweist, der sich im Allgemeinen radial zu jedem der transversalen Kanten des Körpers (5) erstreckt, wobei das Lager **dadurch gekennzeichnet ist, dass** jeder ringförmige Deflektor (10) mindestens einen inneren (11) und einen äußern im Allgemeinen radialen Vorsprung (12) umfasst, die sich auf beiden Seiden des Körpers (5) in Richtung des inneren (1) Rings bzw. des äußern (2) Rings erstrecken, wobei das freie Ende jedes Vorsprungs (11, 12) gegenüber und in einem Abstand vom entsprechenden Ring (1, 2) angerodet ist, so dass das Lager axiale und radiale funktionelle Spiele (13) zwischen den Vorsprüngen (11, 12) und den Ringen (1, 2) aufweist, wobei die Spiele abgemessen sind, um den Durchgang einer Schmierflüssigkeit des Lagers zu ermöglichen und ein Hindernis gegen den Durchgang von festen Partikeln zu bilden.

2. Wälzlager nach Anspruch 1, **dadurch gekennzeichnet, dass** sich mindestens eine der transversalen Kanten des äußeren Rings (2) zwischen den transversalen Kanten des inneren Rings (1) befindet, wobei das freie Ende des äußeren (12) und des inneren (11) Vorsprungs gegenüber einer radialen Fläche (14) des äußeren Rings (2) bzw. einer axialen Fläche (15) des inneren Rings (1) angeordnet ist.

3. Wälzlager nach Anspruch 2, **dadurch gekennzeichnet, dass** der äußere Ring (2) eine axiale Abmessung aufweist, die geringer als diejenige des inneren Rings (1) ist.

4. Käfig, dazu ausgelegt, in einem Wälzlager nach einem der Ansprüche 1 bis 3 montiert zu werden, wobei der Käfig einen im Allgemeinen ringförmigen kegelstumpfartigen Körper (5) umfasst, wobei der Köper (5) gleichförmig verteilte Öffnungen (6) umfasst, in jeder derer ein Rollkörper (4) dazu ausgelegt ist, im Allgemeinen entlang seiner eigenen Drehachse (R) angebracht zu sein, wobei der Käfig außerdem einen ringförmigen Deflektor (10) aufweist, der sich im Allgemeinen radial zu jeder der transversalen Kanten des Körpers (5) erstreckt, wobei jeder ringförmige Deflektor (10) mindestens einen inneren (11) Vorsprung und einen äußern im Allgemeinen radialen Vorsprung (12) umfasst, die sich auf beiden Seiten des Körpers (5) erstrecken, wobei die Abmessungen jedes ringförmigen Deflektors (4) so ausgelegt sind, dass das freie Ende jedes Vorsprungs (11, 12) gegenüber und in einem Abstand vom entsprechenden Ring (1, 2) angeordnet ist und die Bildung von axialen und radialen funktionellen Spielen (13) zwischen den Vorsprüngen (11, 12) und den Ringen (1, 2) aufweist, wobei die Spiele abgemessen sind, um den Durchgang einer Schmierflüssigkeit des Lagers zu ermöglichen und ein Hindernis gegen den Durchgang von festen Partikeln zu bilden.

5. Käfig nach Anspruch 4, **dadurch gekennzeichnet, dass** der ringförmige Körper (5) Materialbrücken (7) zwischen den Öffnungen (6) umfasst, wobei eine axiale Nut auf einem Abschnitt jeder der Seitenflächen der Materialbrücken (7) durchgeführt ist, wobei die Nuten in der Nähe des ringförmigen Deflektors (10) mit dem größten Durchmesser angebracht sind.

6. Käfig nach Anspruch 4 oder 5, **dadurch gekennzeichnet, dass** die äußere transversale Fläche (16) mindestens eines Deflektors (10) in Richtung des anderen Deflektors (10) gebogen ist.

7. Käfig nach einem der Ansprüche 4 bis 6, **dadurch gekennzeichnet, dass** ein Deflektor (10) mindestens einen ununterbrochenen ringförmigen Vorsprung (11, 12) umfasst.

8. Käfig nach einem der Ansprüche 4 bis 7, **dadurch gekennzeichnet, dass** ein Deflektor (10) mindestens eine Vielzahl von benachbarten Vorsprüngen (11, 12) umfasst, wobei die Vorsprünge auf den transversalen Kanten der Öffnungen (6) angeordnet sind, so dass der ringförmige Deflektor (10) abwechselnde Rippen (17) auf den transversalen Kanten und Schlitze (18) zwischen den Öffnungen aufweist.

9. Käfig nach einem der Ansprüche 4 bis 8, **dadurch gekennzeichnet, dass** mindestens ein ringförmiger Deflektor (10) auf der transversalen Kante des Körpers (5) durch Verbindungsmittel verbunden ist.

10. Käfig nach Anspruch 9, **dadurch gekennzeichnet, dass** die Verbindungsmittel Zentrierungsstecker (19) und Haken (20) umfassen, die auf der transversalen Kante des Körpers (5) durchgeführt sind, wobei die Zentrierungsstecker (19) und die Haken (20) mit Öffnungen (21), die auf dem ringförmigen Deflektor (10) durchgeführt sind, zusammenarbeiten.
